(19) Europäisches Patentamt
European Patent Office
Office européen des brevets

(11) EP 4 813 600 A1

(12) **EUROPEAN PATENT APPLICATION**
published in accordance with Art. 153(4) EPC

(43) Date of publication:
**30.09.2026 Bulletin 2026/40**

(21) Application number: **25786524.6**

(22) Date of filing: **25.03.2025**

(51) International Patent Classification (IPC):
***B29B 11/16*** *(2006.01)* ***D01F 6/18*** *(2006.01)*
***D01F 9/22*** *(2006.01)*

(52) Cooperative Patent Classification (CPC):
**B29B 11/16; D01F 6/18; D01F 9/22**

(86) International application number:
**PCT/JP2025/011700**

(87) International publication number:
**WO 2025/216048 (16.10.2025 Gazette 2025/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.04.2024 JP 2024061894**

(71) Applicant: **Toray Industries, Inc.**
**Tokyo 103-8666 (JP)**

(72) Inventors:
- **WATANABE, Jun**
  **Iyo-gun, Ehime 791-3193 (JP)**
- **TANAKA, Fumihiko**
  **Iyo-gun, Ehime 791-3193 (JP)**
- **Nakatani, Tatsuya**
  **Iyo-gun, Ehime 791-3193 (JP)**

(74) Representative: **Prüfer & Partner mbB**
**Patentanwälte · Rechtsanwälte**
**Sohnckestraße 12**
**81479 München (DE)**

(54) **PREPREG, CARBON FIBER BUNDLE USED FOR SAME, AND METHOD FOR PRODUCING CARBON FIBER BUNDLE**

(57) A prepreg including a carbon fiber tow impregnated with a thermosetting resin, wherein the carbon fiber tow has a strand tensile strength of 6.7 to 8.0 GPa and a strand tensile elastic modulus of 340 to 380 GPa; the carbon fiber tow has a thickness of 0.05 to 0.10 mm; the carbon fiber tow has a coefficient of variation of thickness of not more than 5.0%; the carbon fiber tow is substantially untwisted; and the prepreg has a fiber areal weight of 30 to 100 g/m$^2$ and a fiber volume fraction of 50 to 80%. A carbon fiber reinforced composite material obtained with the prepreg of the present invention is excellent in the balance of mechanical properties, can achieve weight reduction, and can be suitably used for sports applications such as golf shafts and fishing rods and for other general industrial applications.



Processed by Luminess, 75001 PARIS (FR)

## Description

### TECHNICAL FIELD

The present invention relates to a prepreg suitably used for sports applications such as golf shafts and fishing rods and for other general industrial applications, and a carbon fiber tow used for the prepreg and a production method for the carbon fiber tow.

### BACKGROUND ART

Carbon fiber tows have extremely high specific strength and specific elastic modulus, and therefore have recently been actively used in various industrial fields as reinforcing fibers for fiber reinforced composite materials. In particular, in fields where weight reduction is regarded as important, replacement of conventional metal materials with carbon fiber reinforced composite materials has been accelerated. Among these, in sports applications, weight reduction is demanded for golf shafts, fishing rods, bicycles, and also rackets, and applications of carbon fiber reinforced composite materials have been increasingly expanded.

For weight reduction in sports applications, there is a demand for further improvement in mechanical properties of carbon fiber tows mainly in terms of resin-impregnated strand tensile strength and resin-impregnated strand tensile elastic modulus (which may be hereinafter simply referred to as strand tensile strength and strand tensile elastic modulus). In addition, there is a demand for carbon fiber reinforced composite materials having excellent well-balanced mechanical properties over a wide range of levels including such as improvement in the tensile strength, tensile elastic modulus, and compressive strength. Further, there is a demand for achievement of high mechanical properties while achieving weight reduction by reducing the amount of a carbon fiber reinforced composite material used.

Polyacrylonitrile-based carbon fiber tows, which are most widely used in carbon fiber reinforced composite materials, are industrially produced by subjecting polyacrylonitrile-based precursor fiber tows to an oxidation process, a pre-carbonization step, and a carbonization step. It is known that the higher the maximum temperature in the carbonization step, the higher the strand tensile elastic modulus of a carbon fiber tow can be.

However, it is generally said that a carbon fiber tow having a high strand tensile modulus obtained by increasing the maximum temperature in the carbonization step has an increased crystallite size, leading to a decreased compressive strength of a carbon fiber reinforced composite material (Patent Document 1). Thus, in a carbon fiber reinforced composite material, the compressive strength and the strand tensile elastic modulus are generally in a trade-off relationship. Therefore, studies have been conducted to improve the strand tensile elastic modulus without increasing the crystallite size. In known techniques for improving the strand tensile elastic modulus without increasing the crystallite size of a carbon fiber tow, the draw ratio in the carbonization step is increased. In order to increase the draw ratio in the carbonization step without reducing the processability, a technique in which entanglement or twist is applied to a precursor fiber tow to improve drawability in the carbonization step (Patent Document 2), a technique in which a precursor fiber is optimized for drawing during stabilization-carbonization (Patent Documents 3 and 4), a technique in which the heating rate in the stabilization-carbonization step is controlled to increase the draw ratio (Patent Document 5), and a technique in which the Weibull shape parameter of single-fiber tensile strength is controlled to control drawability (Patent Document 6) have been proposed.

Further, in order to improve the compressive strength of a carbon fiber reinforced composite material without depending on drawing, a technique in which an oxidized structure is controlled to improve the single-fiber compressive strength of a carbon fiber tow has been proposed (Patent Document 7). Further, in order to increase the tensile strength of a carbon fiber reinforced composite material, a technique in which the fineness of a carbon-fiber single fiber is reduced (Patent Document 8) and a technique in which an oxidized structure is controlled to increase the strand tensile strength of a carbon fiber tow (Patent Document 9) have been proposed. In addition, in order to control the flatness ratio of a carbon fiber tow, a technique in which the hot roller temperature and time in a post-treatment process are controlled has been proposed (Patent Document 10).

### PRIOR ART DOCUMENTS

[Patent Documents]

[Patent Document 1] JP H3-180514 A
[Patent Document 2] WO 2019/244830
[Patent Document 3] WO 2008/047745
[Patent Document 4] JP 2008-308776 A

[Patent Document 5] JP 01-306619 A
[Patent Document 6] JP 2009-256833 A
[Patent Document 7] JP 2015-010290 A
[Patent Document 8] Japanese Translated PCT Patent Application Laid-Open No. 2010-510406
[Patent Document 9] WO 2016/068034
[Patent Document 10] JP 2011-252264 A

SUMMARY OF THE INVENTION

PROBLEMS TO BE SOLVED BY THE INVENTION

By implanting ions into carbon fibers as in Patent Document 1, the crystallite size decreased, and the apparent compressive strength as measured by the loop method increased to as high as 10.0 GPa. However, this was not satisfactory from the viewpoint of the balance with the strand tensile elastic modulus (which may be hereinafter simply referred to as "strand elastic modulus"). Further, in the techniques of Patent Documents 2 to 6, breakage was prevented even when high tension was applied in the carbonization step, and the strand tensile elastic modulus was improved. However, the single-fiber compressive strength and reduction of the fuzz defect count during prepreg processing were not satisfactory.

Further, according to the technique of Patent Document 7, the single-fiber compressive strength can be increased by controlling the oxidized structure. However, the single-fiber fineness was small, and the number of cracks between carbon fiber tows, which affects the quality grade of the carbon fiber tows and the quality grade of the prepreg, could not be controlled. Further, according to the technique of Patent Document 8, the strand tensile strength is increased. However, the single-fiber fineness was small, and the number of cracks between carbon fiber tows, which affects the quality grade of the carbon fiber tows and the quality grade of the prepreg, could not be controlled.

Further, according to the techniques of Patent Documents 2 to 9, the tensile strength, the tensile elastic modulus, and the compressive strength of a carbon fiber reinforced composite material can be increased. However, they have not reached a sufficient level for achieving weight reduction by reducing the amount of use of the carbon fiber reinforced composite material. In addition, according to the technique of Patent Document 10, the flatness ratio of a carbon fiber tow is controlled by controlling the surface temperature and the contact time of the hot roller in the post-treatment process. However, the mechanical properties of the resulting carbon fiber reinforced composite material were not at a satisfactory level.

An object of the present invention is to provide a prepreg that is excellent in the balance of mechanical properties, that can achieve weight reduction, and that is suitably used for sports applications such as golf shafts and fishing rods and for other general industrial applications, and a carbon fiber tow used for the prepreg.

MEANS FOR SOLVING THE PROBLEMS

In order to solve such problems, the present invention has the following configuration.

(1) A prepreg comprising a carbon fiber tow impregnated with a thermosetting resin, wherein the carbon fiber tow has a strand tensile strength of 6.7 to 8.0 GPa and a strand tensile elastic modulus of 340 to 380 GPa; the carbon fiber tow has a thickness of 0.05 to 0.10 mm; the carbon fiber tow has a coefficient of variation of thickness of not more than 5.0%; the carbon fiber tow is substantially untwisted; and the prepreg has a fiber areal weight of 30 to 100 $g/m^2$ and a fiber volume fraction of 50 to 80%.
(2) A carbon fiber tow having a strand tensile strength of 6.7 to 8.0 GPa and a strand tensile elastic modulus of 340 to 380 GPa, wherein the carbon fiber tow has a thickness of 0.05 to 0.10 mm; the carbon fiber tow has a coefficient of variation of thickness of not more than 5.0%; and the carbon fiber tow is substantially untwisted.
(3) The carbon fiber tow according to (2), having a number of filaments of 6000 to 18,000.
(4) The carbon fiber tow according to (2) or (3), having a single-fiber diameter of 5.0 to 6.0 $\mu m$.
(5) The carbon fiber tow according to any one of (2) to (4), having a density of not more than 1.82 $g/cm^3$.
(6) The carbon fiber tow according to any one of (2) to (5), having a crystallite size of 2.5 to 3.3 nm.
(7) The carbon fiber tow according to any one of (2) to (6), having an unwinding fuzz count of not more than 20 per 100 m.
(8) The carbon fiber tow according to any one of (2) to (7), whose single-fiber composite has a single-fiber compressive strength of not less than 4.8 GPa according to a compression fragmentation method.
(9) A method of producing a carbon fiber tow, the method comprising:

a first oxidation process of subjecting a polyacrylonitrile-based precursor fiber tow to heat treatment for 8 to 25

minutes until a ratio of a peak intensity at 1453 $cm^{-1}$ to a peak intensity at 1370 $cm^{-1}$ in an infrared spectrum is within a range of 0.98 to 1.10;

a second oxidation process of subjecting a fiber tow obtained in the first oxidation process to heat treatment for 5 to 14 minutes until a ratio of a peak intensity at 1453 $cm^{-1}$ to a peak intensity at 1370 $cm^{-1}$ in an infrared spectrum is within a range of 0.70 to 0.75 and a ratio of a peak intensity at 1254 $cm^{-1}$ to a peak intensity at 1370 $cm^{-1}$ in an infrared spectrum is within a range of 0.50 to 0.65;

a pre-carbonization step of subjecting a fiber tow obtained in the second oxidation process to heat treatment in an inert atmosphere at a maximum temperature of 600 to 800°C under conditions with a draw ratio of 1.10 to 1.25 and a total heat treatment amount at not less than 600°C of 300 to 600°C·min;

a carbonization step of subjecting a fiber tow obtained in the pre-carbonization step to heat treatment in an inert atmosphere at a maximum temperature of 1670 to 2000°C under conditions with a tension of the fiber tow of 3.0 to 8.0 mN/dtex;

a step of subjecting a fiber tow obtained in the carbonization step to electrolytic surface treatment to obtain a carbon fiber tow; and

a step of continuously immersing the obtained carbon fiber tow in a sizing bath to impregnate the carbon fiber tow with a sizing agent, and then bringing the carbon fiber tow impregnated with the sizing agent into contact with a hot roller at a surface temperature of 100 to 180°C for 30 to 50 seconds to obtain a substantially untwisted carbon fiber tow.

## EFFECT OF THE INVENTION

A carbon fiber reinforced composite material obtained with the prepreg of the present invention is excellent in the balance of mechanical properties, can achieve weight reduction, and can be suitably used for sports applications such as golf shafts and fishing rods and for other general industrial applications.

Further, according to the present invention, a carbon fiber tow for obtaining such a prepreg, and a production method therefor can be provided.

## MODE FOR CARRYING OUT THE INVENTION

The prepreg of the present invention is a prepreg comprising a carbon fiber tow impregnated with a thermosetting resin, wherein the carbon fiber tow has a strand tensile strength of 6.7 to 8.0 GPa and a strand tensile elastic modulus of 340 to 380 GPa; the carbon fiber tow has a thickness of 0.05 to 0.10 mm; the carbon fiber tow has a coefficient of variation of thickness of not more than 5.0%; the carbon fiber tow is substantially untwisted; and the prepreg has a fiber areal weight of 30 to 100 $g/m^2$ and a fiber volume fraction of 50 to 80%. In cases where the prepreg satisfies the above-described properties, the resulting carbon fiber reinforced composite material can satisfy all of the tensile strength, the tensile elastic modulus, and the compressive strength at high levels. Further, since the prepreg has a small thickness, the resulting carbon fiber reinforced composite material can achieve reduction of the amount of its use, and hence reduction of the weight.

The prepreg can be obtained by spreading a carbon fiber tow and then impregnating the carbon fiber tow with a thermosetting resin. Examples of the method of the impregnation include a wet method and a hot-melt method (dry method). The strand tensile strength, the strand tensile elastic modulus, the thickness of the carbon fiber tow, and the coefficient of variation of thickness described above are values obtained by evaluating the carbon fiber tow before spreading by the test methods described later.

The wet method is a method in which a carbon fiber tow is immersed in a solution obtained by dissolving a thermosetting resin in a solvent such as methyl ethyl ketone or methanol, and then the carbon fiber tow is pulled up, followed by evaporating the solvent from the carbon fiber tow using an oven or the like, and impregnating the carbon fiber tow with an epoxy resin composition. The hot-melt method is a method in which a carbon fiber tow is directly impregnated with a thermosetting resin whose viscosity has been reduced by heating, or a method in which a film coated with a thermosetting resin is prepared on release paper or the like, and then the film is layered on one or both sides of a carbon fiber tow, followed by application of heat and pressure to impregnate the carbon fiber tow with the thermosetting resin. Here, only one carbon fiber tow may be used, or a plurality of carbon fiber tows may be aligned and used.

The prepreg has a fiber areal weight of 30 to 100 $g/m^2$, preferably 30 to 80 $g/m^2$, more preferably 50 to 70 $g/m^2$. In cases where the fiber areal weight is not more than 100 $g/m^2$, the prepreg has a small thickness, so that the resulting carbon fiber reinforced composite material can achieve reduction of the amount of use, and hence reduction of the weight.

The prepreg has a fiber volume fraction of 50 to 80%, preferably 55 to 75%, more preferably 55 to 65%. In cases where the fiber volume fraction is not less than 50%, the resulting carbon fiber reinforced composite material can satisfy mechanical properties at high levels. The fiber volume fraction is a value obtained by a measurement method in accordance with JIS K 7075.

The type of the thermosetting resin is not particularly limited, and examples thereof include epoxy resins, vinyl ester resins, phenol resins, benzoxazine resins, bismaleimide resins, cyanate ester resins, and polyimide resins. Among these, epoxy resins are preferred from the viewpoint of excellent handleability and curability in the state before curing. Examples of the epoxy resins include bisphenol A-type epoxy resins; bisphenol F-type epoxy resins; bisphenol S-type epoxy resins; biphenyl-type epoxy resins; naphthalene-type epoxy resins; novolac-type epoxy resins; epoxy resins containing a fluorene skeleton; epoxy resins using, as a raw material, a copolymer of a phenol compound and dicyclopentadiene; glycidyl ether-type epoxy resins such as diglycidyl resorcinol, tetrakis(glycidyloxyphenyl)ethane, and tris(glycidyloxyphenyl)methane; and glycidyl amine-type epoxy resins such as tetraglycidyldiaminodiphenylmethane, triglycidylaminophenol, triglycidylaminocresol, and tetraglycidylxylenediamine. As the epoxy resin, these may be used individually, or a plurality of types thereof may be used in combination.

The curing agent for the epoxy resin is not particularly limited as long as it cures the epoxy resin, and examples thereof include amines such as aromatic amines and alicyclic amines; acid anhydrides; polyaminoamides; organic acid hydrazides; and isocyanates. Amine curing agents are preferred because they are excellent in mechanical properties and heat resistance of the obtained cured resin product. As the amine curing agent, diaminodiphenyl sulfone and diaminodiphenyl methane, which are aromatic amines; dicyandiamide, which is an aliphatic amine, or a derivative thereof; hydrazide compounds; and the like may be used.

The curing agent may also be used in combination with a curing accelerator. Examples of the curing accelerator to be combined include ureas, imidazoles, and Lewis acid catalysts. Among these, urea compounds are preferably used from the viewpoint of the balance between storage stability and catalytic capability. Examples of such urea compounds that may be used include N,N-dimethyl-N'-(3,4-dichlorophenyl)urea, toluenebis(dimethylurea), 4,4'-methylenebis(phenyldimethylurea), and 3-phenyl-1,1-dimethylurea.

The carbon fiber tow of the present invention has a strand tensile elastic modulus of not less than 340 GPa, preferably not less than 350 GPa, more preferably not less than 360 GPa. In cases where the strand elastic modulus is not less than 340 GPa, the tensile elastic modulus of the carbon fiber reinforced composite material can be increased, and the carbon fiber reinforced composite material can be designed to be thin and lightweight. The higher the strand tensile elastic modulus, the better. However, from the viewpoint of single-fiber compressive strength, the strand tensile elastic modulus is controlled such that its upper limit is preferably 380 GPa. Accordingly, the strand tensile elastic modulus is 340 to 380 GPa.

Usually, a higher strand tensile elastic modulus of a carbon fiber tow leads to a lower single-fiber compressive strength. However, in the present invention, the strand tensile elastic modulus and the single-fiber compressive strength can be increased at the same time. The strand tensile elastic modulus is a value evaluated by the strand tensile test described in the Examples section. In order to achieve a strand tensile elastic modulus within the above-described range, it is effective, for increasing the degree of orientation of the polyacrylonitrile-based precursor fibers, to perform control while increasing the draw ratio in the pre-carbonization treatment step and the carbonization step described later, and increasing the maximum temperature in the carbonization step.

The carbon fiber tow of the present invention has a strand tensile strength of not less than 6.7 GPa, preferably not less than 6.9 GPa, more preferably not less than 7.2 GPa. In cases where the strand tensile strength of the carbon fiber tow is not less than 6.7 GPa, the resulting carbon fiber reinforced composite material of the present invention can maintain sufficient tensile strength, and a good balance can be achieved between improvement of the tensile elastic modulus and improvement of the tensile strength in the carbon fiber reinforced composite material, so that the carbon fiber reinforced composite material can be designed to be lightweight. The higher the strand tensile strength, the better. However, from the viewpoint of increasing the tensile strength of the carbon fiber reinforced composite material, a strand tensile strength of 8.0 GPa is sufficient. Thus, the strand tensile strength is 6.7 to 8.0 GPa, preferably 6.9 to 8.0 GPa, more preferably 7.2 to 8.0 GPa. The strand tensile strength is a value evaluated by the strand tensile test described in the Examples section. For increasing the strand tensile strength, the method of producing a carbon fiber tow of the present invention described later may be used.

The carbon fiber tow of the present invention has a thickness of 0.05 to 0.10 mm, preferably 0.05 to 0.09 mm, more preferably 0.05 to 0.085 mm. In cases where the thickness of the carbon fiber tow is not more than 0.10 mm, the prepreg of the present invention can be made sufficiently thin, and as a result, a carbon fiber reinforced composite material having a small thickness can be produced. When the carbon fiber reinforced composite material has an increased performance, it is extremely important to reduce the thickness of the carbon fiber tow in order to reduce the weight of the member. The smaller the thickness of the carbon fiber tow, the better. However, in cases where the thickness is smaller than 0.05 mm, gaps may be formed within the carbon fiber tow, and this may lead to deterioration of the quality grade of the resulting prepreg and deterioration of the mechanical properties of the carbon fiber reinforced composite material. In order to achieve a thickness of the carbon fiber tow within the above-described range, it is necessary to control the hot roller surface temperature and treatment time in the post-treatment process described later.

The carbon fiber tow of the present invention has a coefficient of variation of thickness of not more than 5.0%, preferably not more than 4.0%, more preferably not more than 3.5%. In cases where the coefficient of variation of thickness of the carbon fiber tow is small, the number of cracks between carbon fiber tows in the resulting prepreg is suppressed, and

hence the prepreg can have a favorable quality grade. In cases where the coefficient of variation of thickness of the carbon fiber tow exceeds 5.0%, the number of cracks between carbon fiber tows increases even when the thickness of the carbon fiber tow is small, so that the mechanical properties of the carbon fiber reinforced composite material are greatly decreased. Thus, the present inventors found that, in cases where the thickness of the carbon fiber tow is small and the coefficient of variation of thickness of the carbon fiber tow is not more than 5.0%, the resulting carbon fiber reinforced composite material can satisfy the tensile strength, the tensile elastic modulus, and the compressive strength at high levels while maintaining a favorable quality grade of the prepreg, and in addition, weight reduction can be achieved. The coefficient of variation of thickness of the carbon fiber tow can be controlled not only by reducing the thickness itself of the carbon fiber tow, but also by reducing the unwinding fuzz count described later.

The carbon fiber tow of the present invention is substantially untwisted. The phrase "the carbon fiber tow is substantially untwisted" means that there is no twist at all or that, even if there is twist, it is not more than 0.5 turns per 1 m. When the carbon fiber tow is untwisted and used as a reinforcing fiber for a carbon fiber reinforced composite material, the carbon fiber tow has excellent spreadability, the thickness can be controlled to be small, and the carbon fiber reinforced composite material has excellent mechanical properties and quality grade in many cases.

In the carbon fiber tow of the present invention, the number of filaments is preferably 6000 to 18,000, more preferably 6000 to 12,000. The "number of filaments" refers to the number of single fibers contained in one carbon fiber tow. In cases where the number of filaments is not less than 6000, the number of cracks between carbon fiber tows in the resulting prepreg is reduced, and a prepreg having a favorable quality grade can be obtained. In cases where the number of filaments is not more than 18,000, the thickness of the carbon fiber tow can be kept small, and a prepreg having a small thickness can be obtained. The number of filaments can be arbitrarily determined in the production process of the polyacrylonitrile-based precursor fiber tow.

In the carbon fiber tow of the present invention, the diameter of the single fibers contained in the carbon fiber tow (hereinafter referred to as the single-fiber diameter) is preferably 5.0 to 6.0 μm, more preferably 5.0 to 5.8 μm, still more preferably 5.0 to 5.5 μm. The single-fiber diameter is evaluated by the method described in the Examples section. In cases where the cross-sectional shape of the single fiber is not a true circle, an equivalent circle diameter is used instead. The equivalent circle diameter refers to the diameter of a true circle having a cross-sectional area equal to an actually measured cross-sectional area of the single fiber. When a prepreg is produced by impregnating the carbon fiber tow with a thermosetting resin, the impregnation properties depend on the single-fiber diameter, and therefore a composite material can be efficiently produced when the single-fiber diameter is large. Further, since the breaking load per single fiber is dependent on the strand strength of the carbon fiber tow and the cross-sectional area of the single fiber, the single-fiber diameter affects the breaking load per single fiber. Further, the larger the single-fiber diameter, the less likely fuzzing due to abrasion during the process tends to occur, so that the single-fiber diameter affects the quality grade of the carbon fiber tow. In cases where the single-fiber diameter is not less than 5.0 μm, the quality grade of the carbon fiber tow is favorable, and as a result, unwinding fuzz tends to be reduced, and the quality grade of the resulting prepreg tends to be favorable. In cases where the single-fiber diameter is excessively large, reaction may proceed non-uniformly within the single fiber during the stabilization-carbonization process, leading to low strand strength and low strand elastic modulus in some cases. Therefore, the single-fiber diameter is preferably not more than 6.0 μm, more preferably not more than 5.8 μm. The single-fiber diameter can be controlled by the discharge amount from the spinneret during spinning of the precursor fiber tow, the draw ratio in each process, and the like.

The carbon fiber tow of the present invention has a density of preferably not more than 1.82 g/m$^3$, more preferably not more than 1.79 g/m$^3$. The lower the density, the more the specific strength and the specific elastic modulus are improved, so that the carbon fiber composite material can be efficiently prepared. In cases where the density is not more than 1.82 g/cm$^3$, the efficiency of preparation of the carbon fiber composite material tends to be increased. The density used in the present invention can be evaluated by the method described in the Examples section. Further, since the specific strength and the specific elastic modulus may decrease when the density is excessively small, the density is preferably not less than 1.70 g/m$^3$, more preferably not less than 1.73 g/m$^3$. In order to control the density of the carbon fiber tow within the above-described range, it is important to control the draw ratio in the pre-carbonization step, the maximum temperature in the carbonization step, and the like.

The carbon fiber tow of the present invention preferably has a crystallite size of 2.5 to 3.3 nm, more preferably 2.5 to 3.0 nm. In cases where the crystallite size is not less than 2.5 nm, both the compressive strength and the strand tensile elastic modulus of the carbon fiber tow can be satisfied at high levels. Further, in cases where the crystallite size is too large, the single-fiber compressive strength may decrease. Therefore, the crystallite size is preferably not more than 3.3 nm, more preferably not more than 3.0 nm. In general, as the crystallite size of a carbon fiber increases, the single-fiber compressive strength tends to decrease. However, the carbon fiber tow of the present invention has both a large crystallite size and a high single-fiber compressive strength. The crystallite size used in the present invention can be evaluated by the wide-angle X-ray diffraction method described in the Examples section. In order to control the crystallite size within the above-described range, it is important, for example, to increase the maximum temperature in the carbonization step, and to increase the draw ratio in the carbonization step.

The carbon fiber tow of the present invention preferably has an unwinding fuzz count of not more than 20 per 100 m, more preferably not more than 16 per 100 m, still more preferably not more than 9 per 100 m. In cases where the unwinding fuzz count of the carbon fiber tow is high, breakage of single fibers in the carbon fiber tow increases, so that the coefficient of variation of thickness of the carbon fiber tow tends to increase. Therefore, the number of cracks between carbon fiber tows increases in the resulting prepreg, and as a result, the quality grade of the prepreg may be deteriorated, and the mechanical properties of the resulting carbon fiber reinforced composite material may be deteriorated. Further, in cases where the unwinding fuzz count of the carbon fiber tow is high, snagging tends to occur when the carbon fiber tow is pulled out, resulting an increase in the fuzz defect count. The present inventors found that, in cases where the unwinding fuzz count of the carbon fiber tow is not more than 20 per 100 m, the coefficient of variation of thickness of the carbon fiber tow decreases, so that the number of cracks between carbon fiber tows decreases in the resulting prepreg. As a result, the mechanical properties of the carbon fiber reinforced composite material can be satisfied at high levels while keeping a favorable quality grade of the prepreg, and weight reduction can also be achieved. The unwinding fuzz count is measured by the method described in the Examples section. In order to control the unwinding fuzz count per 100 m of the carbon fiber tow within the above-described range, it is important not only to control the draw ratio in the pre-carbonization step and the carbonization step described later, but also to control the total heat treatment amount at not less than 600°C in the pre-carbonization step.

A single-fiber composite of the carbon fiber tow of the present invention preferably has a single-fiber compressive strength of not less than 4.8 GPa according to a compression fragmentation method. In cases where the single-fiber compressive strength is not less than 4.8 GPa, its balance with the high strand tensile elastic modulus of the carbon fiber tow of the present invention is favorable, so that the compressive strength of the resulting carbon fiber reinforced composite material can be kept easily and sufficiently, and high mechanical properties and weight reduction of the carbon fiber reinforced composite material can be easily achieved at the same time. In order to achieve a single-fiber compressive strength within the above-described range, it is important to control the balance between the tension and the maximum temperature in the carbonization step.

The method of producing a carbon fiber tow of the present invention is described below.

In the method of producing a carbon fiber tow, a polyacrylonitrile-based precursor fiber tow is subjected to an oxidation process, a pre-carbonization step, and a carbonization step, to obtain a carbon fiber tow.

In the present invention, the oxidation process refers to a process in which a polyacrylonitrile-based precursor fiber tow is subjected to heat treatment at 200 to 400°C in an oxidizing atmosphere whose oxygen concentration corresponds to the oxygen concentration in air ±5% by mass, thereby obtaining an oxidized fiber tow. The total treatment time of the oxidation process may be appropriately selected preferably within the range of 13 to 20 minutes. The preferred ranges of the oxidation treatment time and the oxidation temperature vary depending on the properties of the polyacrylonitrile-based precursor fiber tow and the copolymer composition of the polyacrylonitrile-based polymer.

In order to increase the strand tensile strength of the carbon fiber tow, especially when the polyacrylonitrile-based precursor fiber tow is subjected to the oxidation process, it is necessary to perform control such that, in the obtained oxidized fiber, the ratio of the peak intensity at 1453 $cm^{-1}$ to the peak intensity at 1370 $cm^{-1}$ in the infrared spectrum is within the range of 0.70 to 0.75, and the ratio of the peak intensity at 1254 $cm^{-1}$ to the peak intensity at 1370 $cm^{-1}$ in the infrared spectrum is within the range of 0.50 to 0.65.

The peak at 1453 $cm^{-1}$ in the infrared spectrum is a peak derived from alkene, and the peak decreases as the oxidation proceeds. The peak at 1370 $cm^{-1}$ and the peak at 1254 $cm^{-1}$ are peaks derived from oxidized structures (that are considered to be a naphthyridine ring and a hydrogenated naphthyridine ring structure, respectively), and the peaks increase as the oxidation proceeds. In the oxidation process, it is common to reduce peaks derived from polyacrylonitrile as much as possible so as to increase the carbonization yield. However, in the present invention, the conditions of the oxidation process are set so as to intentionally leave a large amount of alkene in the oxidized fiber. It is considered that, by subjecting an oxidized fiber having such a structure to the pre-carbonization step, an effect of increasing the strand tensile strength of the obtained carbon fiber tow can be produced. Further, it is important to set the oxidation conditions such that the ratio of the peak intensity at 1254 $cm^{-1}$ to the peak intensity at 1370 $cm^{-1}$ is 0.50 to 0.65. The peak at 1254 $cm^{-1}$ is often observed in portions where oxidation is insufficient, and the presence of a large amount of this structure is considered to decrease the strand tensile strength of the obtained carbon fiber. Such a peak intensity ratio decreases as the oxidation proceeds, and the decrease is particularly large in the initial stage. However, depending on the oxidation conditions, such a peak intensity ratio may not become 0.65 or less even when the time is increased.

In order to simultaneously satisfy these two peak intensity ratios within the target ranges, basically, the conditions may be set mainly focusing on the facts that the amount of copolymer component contained in the polyacrylonitrile-based polymer constituting the polyacrylonitrile-based precursor fiber tow is small, that the degree of crystal orientation of the polyacrylonitrile-based precursor fiber tow is high, that the fineness of the polyacrylonitrile-based precursor fiber tow is small, and that a higher oxidation temperature is set in the latter half. Thus, in the oxidation process, it is preferred to carry out heat treatment until the ratio of the peak intensity at 1453 $cm^{-1}$ to the peak intensity at 1370 $cm^{-1}$ in the infrared spectrum is within the range of 0.98 to 1.10 (first oxidation process), followed by carrying out heat treatment at a temperature higher

than that in the first oxidation process with an oxidation time of 5 to 14 minutes, preferably 5 to 10 minutes, until the ratio of the peak intensity at 1453 $cm^{-1}$ to the peak intensity at 1370 $cm^{-1}$ in the infrared spectrum is within the range of 0.70 to 0.75 and the ratio of the peak intensity at 1254 $cm^{-1}$ to the peak intensity at 1370 $cm^{-1}$ in the infrared spectrum is within the range of 0.50 to 0.65 (second oxidation process). In order to shorten the oxidation time in the second oxidation process, the oxidation temperature may be adjusted to be high, but the appropriate oxidation temperature is dependent on the properties of the polyacrylonitrile-based precursor fiber tow. In order to satisfy the above-described ranges in the infrared spectrum, the center temperature of the fiber tow is preferably adjusted to 280 to 310°C, more preferably 280 to 300°C, still more preferably 280 to 285°C. The oxidation temperature need not be constant, and a multistage temperature setting may also be employed. In order to increase the shear elastic modulus of the obtained carbon fiber, it is preferred to increase the oxidation temperature and to reduce the oxidation time. In the first oxidation process, the oxidation time is preferably 8 to 25 minutes, more preferably 8 to 15 minutes, and the oxidation is preferably carried out at an oxidation temperature that satisfies the above-described range.

The oxidation time described herein means the time during which the fiber tow stays in an oxidation furnace. The oxidized fiber means a fiber after the oxidation process but before the pre-carbonization step. The peak intensity in the infrared spectrum described herein means the absorbance at each wavelength obtained by sampling a small amount of the oxidized fiber, measuring the infrared spectrum thereof, and performing baseline correction of the obtained spectrum, wherein peak separation and the like are not particularly performed. Before the measurement of the infrared spectrum, the sample is diluted with KBr to a concentration of 0.67% by mass. Thus, the infrared spectrum may be measured each time the conditions set for the oxidation are changed, and the conditions may be studied according to the preferred production method described later. By appropriately controlling the infrared spectrum peak intensity ratio of the oxidized fiber, the nonlinearity of the stress-strain curve of the obtained carbon fiber can be controlled.

The amount of copolymerization component contained in the polyacrylonitrile-based polymer is preferably 0.1 to 2% by mass, more preferably 0.1 to 1% by mass. Although addition of a copolymerization component is effective for promoting the oxidation reaction, the effect can be hardly obtained in cases where the copolymerization amount is less than 0.1% by mass. Further, in cases where the copolymerization amount exceeds 2% by mass, oxidation of the surface layer of the single fiber is preferentially promoted, and oxidation inside the oxidized yarn becomes insufficient, so that the above-described ranges of the peak intensity ratios in the infrared spectrum are often not satisfied.

Regarding monomers that can be used as the copolymerization component, monomers containing one or more carboxylic acid groups or amide groups are preferably used from the viewpoint of promoting the oxidation. Examples of the monomers containing a carboxylic acid group include acrylic acid, methacrylic acid, itaconic acid, alkali metal salts thereof, and ammonium salts thereof. Examples of the monomers containing an amide group include acrylamide.

In the present invention, the pre-carbonization step refers to a step in which the oxidized fiber tow obtained in the oxidation process is subjected to heat treatment in an inert atmosphere at a maximum temperature of 600 to 800°C to obtain a pre-carbonized fiber tow. In cases where the maximum temperature of the pre-carbonization temperature is not less than 600°C, the pre-carbonized fiber tow can be carbonized in the subsequent carbonization step without being broken by thermal decomposition. Regarding the pre-carbonization temperature, there is no particular upper limit of the maximum temperature. However, the pre-carbonization temperature is preferably not more than 800°C in order to be not more than the carbonization temperature in the subsequent carbonization step.

In the present invention, the draw ratio in the pre-carbonization step is 1.10 to 1.25, more preferably 1.12 to 1.20. Generally, as the draw ratio in the pre-carbonization step increases, the strand tensile strength and the strand tensile elastic modulus of the carbon fiber are improved, but fuzz is more likely to occur. In cases where the draw ratio is within the range of 1.10 to 1.20, the strand tensile strength and the strand tensile elastic modulus of the carbon fiber tow and the quality grade of the carbon fiber tow are sufficiently satisfied at high levels.

In the present invention, the total heat treatment amount at not less than 600°C in the pre-carbonization step is 300 to 600°C·min, preferably 300 to 500°C·min, more preferably 300 to 400°C·min. Here, the heat treatment amount is a value obtained by multiplying the set temperature by the treatment time in the pre-carbonization step. The total heat treatment amount at not less than 600°C is the sum of values obtained by multiplying each set temperature by each treatment time in all areas at not less than 600°C in the pre-carbonization step. In cases where the total heat treatment amount at not less than 600°C in the pre-carbonization step is 300 to 600°C·min, structure formation in the pre-carbonization step can be easily controlled, so that uniform tension can be applied to the fiber tow, and drawing in the pre-carbonization step can be easily carried out without impairing the quality grade. Further, as a result, in the subsequent carbonization step, drawing can be easily carried out while maintaining the quality grade, and the unwinding fuzz count of the carbon fiber tow can be kept low. Therefore, the strand tensile strength and the strand tensile elastic modulus can be increased, and the coefficient of variation of thickness of the carbon fiber tow can be reduced.

In the present invention, the carbonization step refers to a step in which a pre-carbonized fiber tow obtained in the pre-carbonization step is subjected to heat treatment in an inert atmosphere at a maximum temperature of 1670 to 2000°C, preferably 1700 to 1900°C, to obtain a carbonized fiber tow. In general, as the maximum temperature in the carbonization step increases, the crystallite size increases, and the orientation becomes more aligned, so that the elastic modulus in a

strand tensile test is improved, while the single-fiber compressive strength and the strand tensile strength of the carbon fiber tow decrease. In cases where the carbonization temperature is 1670°C, carbonization sufficiently proceeds, and the crystallite size increases. In cases where the carbonization temperature is not more than 2000°C, the single-fiber compressive strength and the strand tensile strength of the carbon fiber tow can be sufficiently maintained.

In the present invention, the tension of the fiber tow in the carbonization step is 3.0 to 8.0 mN/dtex, preferably 3.5 to 7.5 mN/dtex, more preferably 3.5 to 6.0 mN/dtex. By allowing the carbonization while applying tension in the carbonization step, the orientation of crystallites can be aligned, and the initial elastic modulus in a strand tensile test of the carbon fiber tow is improved. In cases where the tension is not less than 3.0 mN/dtex, a sufficient initial elastic modulus can be achieved in a strand tensile test of the carbon fiber tow. In cases where the tension is not more than 8.0 mN/dtex, generation of fuzz in the carbonization step can be suppressed even when a substantially untwisted fiber tow is used. In the carbonization step, it is necessary to apply tension while maintaining the maximum temperature. In cases where the maximum temperature in the carbonization step is low, the initial elastic modulus in a strand tensile test of the obtained carbon fiber tow is insufficient. When the tension in the carbonization step is increased in order to satisfy such an initial elastic modulus, fuzz is generated and becomes entangled around rollers and the like, resulting in a significant decrease in productivity. Further, in cases where the tension in the carbonization step is low, the initial elastic modulus in a strand tensile test of the carbon fiber tow is insufficient. When the maximum temperature in the carbonization step is increased in order to satisfy such an initial elastic modulus, the single-fiber compressive strength of the carbon fiber tow decreases. The tension in the carbonization step is measured by pinching, with a tension meter, the running carbon fiber tow immediately after coming out of the heating furnace in the carbonization step. The tension can be adjusted by controlling the speeds of the rollers before and after the carbonization step.

The carbon fiber tow obtained as described above is preferably further introduced with an oxygen-containing functional group by electrolytic surface treatment. For the electrolytic surface treatment, gas-phase oxidation, liquid-phase oxidation, and liquid-phase electrolytic oxidation are used. From the viewpoint of increasing productivity and enabling uniform treatment, liquid-phase electrolytic oxidation is preferably used. In the present invention, the method of liquid-phase electrolytic oxidation is not particularly limited, and any known method may be used therefor.

In order to impart a bundling property to the carbon fiber tow obtained after such electrolytic surface treatment, the carbon fiber tow is subjected to a sizing treatment, wherein the carbon fiber tow is continuously immersed in a sizing bath to impregnate the carbon fiber tow with a sizing agent. As the sizing agent, a sizing agent having good compatibility with the matrix resin may be appropriately selected in accordance with the type of matrix resin used in the composite material. From the viewpoint of achieving both abrasion resistance and a resin impregnation property, the adhesion amount of the sizing agent is preferably 0.5 to 2.0% by mass when the whole carbon fiber tow including the sizing agent is taken as 100% by mass.

After the impregnation with the sizing agent, the carbon fiber impregnated with the sizing agent is brought into contact with a hot roller at a surface temperature of 100 to 180°C, preferably 100 to 160°C. This step is referred to as a post-treatment process. In cases where the surface temperature of the hot roller is less than 100°C, the sizing agent imparted to the carbon fiber tow is not sufficiently dried, and as a result, the thickness of the carbon fiber tow increases. In cases where the surface temperature of the hot roller exceeds 180°C, the sizing agent imparted to the carbon fiber tow is decomposed, resulting in deterioration of the bundling property. Therefore, the quality grade of the carbon fiber tow itself is deteriorated, and winding of fuzz around a roller during the production of the carbon fiber tow occurs, so that the unwinding fuzz count increases, and the coefficient of variation of thickness of the carbon fiber tow increases. In cases where the surface temperature of the hot roller is 100 to 180°C, the carbon fiber tow can be sufficiently controlled to have a small thickness, and to have a small coefficient of variation of thickness.

The contact time with such a hot roller is 30 to 50 seconds, preferably 30 to 45 seconds. In cases where the contact time with the hot roller is less than 30 seconds, the sizing agent imparted to the carbon fiber tow is not sufficiently dried, and as a result, the thickness of the carbon fiber tow increases. In cases where the contact time with the hot roller exceeds 50 seconds, the sizing agent imparted to the carbon fiber tow is decomposed, resulting in deterioration of the bundling property. Therefore, the quality grade of the carbon fiber tow itself is deteriorated, and winding of fuzz around a roller during the production of the carbon fiber tow occurs, so that the unwinding fuzz count increases, and the coefficient of variation of thickness of the carbon fiber tow increases. In cases where the contact time with the hot roller is 30 to 50 seconds, the carbon fiber tow can be sufficiently controlled to have a small thickness, and to have a small coefficient of variation of thickness.

## EXAMPLES

The methods for measuring various physical values used in the present invention are as described below.

<Strand Tensile Test of Carbon Fiber Tow>

In accordance with the "strand test method" of JIS R7608 (2008), the strand tensile strength, the strand tensile elastic modulus, and the initial elastic modulus of a carbon fiber tow were determined. At this time, the strand elastic modulus was measured within the strain range of 0.1 to 0.6%. The initial elastic modulus in the strand tensile test is defined as the coefficient b of the first-order term obtained by fitting an S-S curve obtained by the tensile test of the strand to the quadratic function $y = ax^2 + bx + c$ within the range of $0 \leq y \leq 3$, wherein x represents strain and y represents stress (GPa). The strain was measured using an extensometer. Seven strands were subjected to the measurement, and the arithmetic mean values of the measurement results were taken as the strand strength, the strand elastic modulus, and the initial elastic modulus of the carbon fiber tow.

The test piece was prepared by impregnating the carbon fiber tow with the following resin composition and curing it by heat treatment under conditions at a temperature of 130°C for 35 minutes.

[Resin Composition]

- 3,4-Epoxycyclohexylmethyl-3,4-epoxy-cyclohexane-carboxylate (100 parts by mass)
- Boron trifluoride monoethylamine (3 parts by mass)
- Acetone (4 parts by mass)

As the above 3,4-epoxycyclohexylmethyl-3,4-epoxy-cyclohexane-carboxylate, Celloxide (registered trademark) P2021P (manufactured by Daicel Corporation) was used.

<Thickness of Carbon Fiber Tow and Coefficient of Variation Thereof>

A load of $0.1 \times 10^{-3}$ N/denier was applied to a carbon fiber tow to align the carbon fiber tow. At the center of the carbon fiber tow, the thickness was measured at 20 points at intervals of 3 m using a micrometer. The average value for the 20 points was taken as the thickness of the carbon fiber tow, and the standard deviation for the 20 points was used as the standard deviation of the thickness of the carbon fiber tow. As the coefficient of variation of thickness of the carbon fiber tow, a value expressed as a percentage obtained by taking the ratio between the above-described thickness of the carbon fiber tow and the standard deviation of the thickness is used. Coefficient of variation (%) = ([standard deviation] / [average value] $\times$ 100).

<Thickness of Carbon Fiber Tow after Spreading>

While a load of $0.1 \times 10^{-3}$ N/denier was applied to a carbon fiber tow, the carbon fiber tow was slid 10 times on a metal roller to spread carbon fibers. Thereafter, the thickness was measured at 20 points at intervals of 3 m using a micrometer at the center of the carbon fiber tow. The average value for the 20 points was used as the thickness of the carbon fiber tow after spreading. The thickness of the carbon fiber tow after spreading is an index related to the thickness of the resulting prepreg.

<Single-Fiber Diameter of Carbon Fiber Tow>

A single-fiber cross section of the carbon fiber tow to be evaluated was observed under a scanning electron microscope, and the diameter of a true circle having the same cross-sectional area as the cross-sectional area of the single fiber was calculated and taken as the single-fiber diameter. In the Examples and Comparative Examples described later, a scanning electron microscope (SEM) "S-4800" manufactured by Hitachi High-Technologies Corporation was used as the scanning electron microscope, and the acceleration voltage was set to 5 keV.

<Density of Carbon Fiber Tow>

The density (g/cm$^3$) of the carbon fiber tow was calculated by an Archimedes method using o-dichlorobenzene as a specific gravity liquid. Three samples were measured, and the average value was taken as the density.

<Crystallite Size>

Carbon fiber tows to be subjected to measurement were aligned, and solidified using a collodion-alcohol solution,

to prepare a measurement sample in the form of a quadrangular prism with a length of 4 cm and a side length of 1 mm. The prepared measurement sample was subjected to measurement using a wide-angle X-ray diffraction apparatus under the following conditions.

- X-ray source: CuKα radiation (tube voltage, 40 kV; tube current, 30 mA)
- Detector: goniometer + monochromator + scintillation counter
- Scan range: 2θ = 10 to 40°
- Scan mode: step scan; step unit, 0.01°; scan rate, 1°/min.

In the obtained diffraction pattern, Gaussian peak fitting was performed on a peak appearing in the vicinity of 2θ = 25 to 26°. The full width at half maximum was determined, and from this value, the crystallite size was calculated according to the following Scherrer equation.

$$\text{Crystallite size (nm)} = K\lambda / \beta_0 \cos\theta_B$$

wherein

K: 1.00, λ: 0.15418 nm (wavelength of X-ray)
$\beta 0$: $(\beta E^2 - \beta_1^2)^{1/2}$
$\beta_E$: apparent full width at half maximum (measured value) rad, $\beta_1$: $1.046 \times 10^{-2}$ rad
θB: Bragg diffraction angle

This measurement was performed 10 times for each level, and the average value of the obtained values was taken as the crystallite size. In the Examples and Comparative Examples described later, XRD-6100 (manufactured by Shimadzu Corporation) was used as the wide-angle X-ray diffraction apparatus.

<Unwinding Fuzz Count>

After placing a bobbin of a carbon fiber tow on a creel, the carbon fiber tow was taken up with a roller at 2 m/min under a tension of 1.6 mN/dtex and wound up with a winder. At this time, aggregate fuzz and balls of fuzz as defined below, which were generated between the creel and the roller, were counted for 50 minutes, and the unwinding fuzz count was calculated by the following equation.

Unwinding fuzz count (per 100 m) = fuzz count number (aggregate fuzz + balls of fuzz) / measured length (m) × 100

Aggregate fuzz: a broken carbon-fiber single fiber exposed from the carbon fiber tow by not less than 5 mm is referred to as fuzz; aggregate fuzz means an aggregate in which three or more pieces of such fuzz are present within a gauge length of 10 mm.
Ball of fuzz: a mass having a diameter of not less than 5 mm formed by entanglement of broken carbon-fiber single fibers exposed from the carbon fiber tow.
Here, the diameter of a ball of fuzz means the length of the longest line segment from one end to the other end of the ball of fuzz.

<Test for Measuring Single-Fiber Compressive Strength of Single-Fiber Composite>

The single-fiber compressive strength of a single-fiber composite was measured by a compression fragmentation method according to the following procedures (A) to (E).

(A) Adjustment of Resin

After placing 190 parts by mass of a bisphenol A-type epoxy resin compound "Epotohto (registered trademark)" YD-128 (manufactured by Nippon Steel Chemical Co., Ltd.) and 20.7 parts by mass of diethylenetriamine (manufactured by Wako Pure Chemical Industries, Ltd.) in a container, the resulting mixture was stirred with a spatula, and defoamed using an automatic vacuum deaerator.

(B) Sampling of Carbon-Fiber Single Fibers and Fixation to Mold

A carbon fiber tow having a length of about 20 cm was divided into four approximately equal parts, and single fibers were sampled in sequence from the four tows. At this time, sampling was performed as evenly as possible throughout the entire tows. Subsequently, double-sided tape was attached to both ends of a sheet having an open hole, and the sampled single fibers were fixed to the sheet having an open hole while a constant tension was applied to the single fibers. Subsequently, a glass plate having a polyester film "Lumirror (registered trademark)" (manufactured by Toray Industries, Inc.) attached thereto was prepared, and a spacer having a thickness of 2 mm was fixed to the film for adjusting the thickness of a test piece. The sheet having an open hole to which the single fibers had been fixed was placed on the spacer, and further, a glass plate similarly having a film attached thereto was set thereon such that the film-attached surface faced downward. At this time, in order to control the fiber embedding depth, tape having a thickness of about 70 μm was attached to both ends of the film.

(C) From Resin Casting to Curing

The resin prepared by the procedure (A) was poured into the mold obtained by the procedure (B) (the space surrounded by the spacer and the films). Using an oven that had been heated to 50°C in advance, the mold into which the resin had been poured was heated for 5 hours. Thereafter, the mold was cooled to a temperature of 30°C at a cooling rate of 2.5°C/min. The resin was then released from the mold and cut to obtain a test piece of 2 cm × 7.5 cm × 0.2 cm. At this time, the test piece was cut such that the single fibers were positioned within a width of 0.5 cm at the center of the width of the test piece.

(D) Measurement of Fiber Embedding Depth

For the test piece obtained by the procedure (C), the fiber embedding depth was measured using the laser of a laser Raman spectrophotometer (NRS-3200, JASCO Corporation) and a 532-nm notch filter. First, the laser was applied to the surface of a single fiber, and the stage height was adjusted such that the beam diameter of the laser was minimized. The height at that time was taken as A (μm). Subsequently, the laser was applied to the surface of the test piece, and the stage height was adjusted such that the beam diameter of the laser was minimized. The height at that time was taken as B (μm). The fiber embedding depth d (μm) was calculated by the following equation (1) using the refractive index of the resin, 1.732, measured using the above laser.

$$d = (A - B) \times 1.732 \ldots (1).$$

(E) Four-Point Bending Test

For the test piece obtained by the procedure (C), compressive strain was applied by four-point bending using a jig having an outer indenter spacing of 50 mm and an inner indenter spacing of 20 mm. While strain was applied in a stepwise manner with an increment of 0.1%, the test piece was observed using a polarizing microscope to measure the number of breaks in the central 5-mm portion in the longitudinal direction of the test piece. Twice the measured number of breaks was taken as the fiber break count (per 10 mm), and the compressive stress calculated from the compressive strain at which the average fiber break count in 30 tests exceeded 1 per 10 mm was taken as the single-fiber compressive strength. Further, the single-fiber composite strain $\varepsilon$ (%) was measured using a strain gauge attached at a position about 5 mm distant in the width direction from the center of the test piece. The final compressive strain $\varepsilon_c$ of the carbon-fiber single fiber was calculated by the following equation (2) taking into account the gauge factor $\kappa$ of the strain gauge, the fiber embedding depth d (μm) measured by the procedure (D), and the residual strain (0.14 (%)).

$$\varepsilon_c = \varepsilon \times (2 / \kappa) \times (1 - d / 1000) - 0.14 \ldots (2)$$

<Intensity Ratios in Infrared Spectrum>

An oxidized fiber to be subjected to measurement was frozen and pulverized, and 2 mg of the pulverized fiber was precisely weighed and collected. The fiber was then thoroughly mixed with 300 mg of KBr, placed in a molding jig, and pressurized at 40 MPa for 2 minutes using a press machine, to prepare a tablet for measurement. The tablet was set in a Fourier transform infrared spectrophotometer, and the spectrum was measured in the range of 1000 to 2000 $cm^{-1}$. Background correction was performed such that the minimum value in the range of 1700 to 2000 $cm^{-1}$ was 0, by subtracting

the minimum value from each intensity. In the Examples and Comparative Examples described later, Paragon 1000, manufactured by PerkinElmer, was used as the Fourier transform infrared spectrophotometer.

<Prepreg Quality Grade>

A prepreg was observed over 10 m in the longitudinal direction, and the prepreg quality grade was evaluated according to the following index. The prepreg quality grade is an index represented by the number of cracks between carbon fiber tows. S has the highest quality grade, and C has the lowest quality grade. Controlling the prepreg quality grade to be high makes it possible to reduce the thickness of the prepreg and, as a result, reduces the amount of the carbon fiber reinforced composite material used, so that the prepreg quality grade serves as an index of weight reduction.

S: None
A: 1 to 5 per 50 m
B: 6 to 20 per 50 m
C: 21 or more per 50 m.

<Prepreg Fuzz Defect Count>

A prepreg was observed over 50 m in the longitudinal direction, and the prepreg fuzz defect count (per 100 $m^2$) was evaluated according to the following index after conversion into the count per 100 $m^2$. A prepreg fuzz defect refers to a fuzz ball having a diameter of not less than 10 mm, and the prepreg fuzz defect count refers to the number of prepreg fuzz defects per unit area of the prepreg. Here, the diameter of the fuzz ball is the length of the longest line segment from end to end of the fuzz ball. The lower the prepreg fuzz defect count, the better, and the higher the prepreg fuzz defect count, the poorer. By controlling the prepreg fuzz defect count to be low, defects of the resulting carbon fiber reinforced composite material can be reduced, leading to an excellent balance of mechanical properties and reduction of the amount of the carbon fiber reinforced composite material used. Therefore, the prepreg fuzz defect count serves as an index of weight reduction.

S: 3 or less per 100 $m^2$
A: more than 3 per 100 $m^2$, and 9 or less per $m^2$
B: more than 9 per 100 $m^2$, and 20 or less per $m^2$
C: more than 20 per 100 $m^2$.

<Measurement of 0° Compressive Strength of Carbon Fiber Reinforced Composite Material, and Measurement of 0° Tensile Strength and 0° Tensile Elastic Modulus of Carbon Fiber Reinforced Composite Material>

Raw material resins of a thermosetting resin excluding a curing agent and a curing accelerator were mixed using a kneader, and stirred for 1 hour to obtain a resin composition. Subsequently, the obtained resin composition was applied onto the silicone surface of silicone-coated release paper, to obtain a resin film. Around the surface of a steel drum having a circumference of about 2.7 m and whose temperature was adjusted to 60 to 70°C, the obtained resin film was wound such that the surface of the resin composition faced outward. Subsequently, a carbon fiber tow unwound from a creel was arranged via a traverse on the surface of the resin composition wound around the steel drum. Further, the carbon fiber tow was covered with another sheet of the resin film such that the surface of the resin composition faced the carbon fiber tow, and pressure was applied while a separately prepared roll was in contact with and rotating on the surface of the outer resin film, thereby impregnating the fiber tow with the resin, to prepare a unidirectional prepreg having a width of 300 mm and a length of 2.7 m. Here, the fiber areal weight of the prepreg was adjusted to 70 to 80 g/$m^2$ by adjusting the rotation speed of the drum and the feed speed of the traverse. A plurality of obtained prepregs were layered on each other while the fibers were unidirectionally aligned, and treated at a temperature of 130°C under a pressure of 0.3 MPa for 2 hours to cure the resin. As a result, a laminate (fiber reinforced composite material) having a thickness of 1 mm was obtained. From the laminate, a test piece having a thickness of 1 $\pm$ 0.1 mm, a width of 12.7 $\pm$ 0.13 mm, a length of 80 $\pm$ 0.013 mm, and a gauge section length of 5 $\pm$ 0.13 mm was cut out. The gauge section length of 5 $\pm$ 0.13 mm was set by fixing reinforcing plates to both ends (37.5 mm from each end) of the test piece using an adhesive or the like. In accordance with ASTM D695 (1996), the compressive strength was measured for each test piece under conditions with a strain rate of 1.27 mm/min, and the obtained compressive strength was converted into the compressive strength at a fiber volume fraction of 60%. The measurement was performed for n = 6, and the average value was taken as the 0° compressive strength of the carbon fiber reinforced composite material in the present invention.

Further, as described in JIS K7017 (1999), the unidirectional reinforcement material was cut into a width of 12.7 mm and a length of 230 mm, and tabs made of a glass fiber reinforced plastic having a thickness of 1.2 mm and a length of

50 mm were bonded to both ends, to obtain a test piece. For the thus obtained test piece, a tensile test was performed at a crosshead speed of 1.27 mm/min using a universal tester manufactured by Instron Corporation, to measure the 0° tensile strength and the 0° tensile elastic modulus. The tensile strength and the elastic modulus obtained were converted into the tensile strength and the elastic modulus at a fiber volume fraction of 60%. The strain was measured using a strain gauge. The 0° tensile elastic modulus was measured in the strain range of 0.1 to 0.6%. The measurement was performed for n = 6, and the average values were taken as the 0° tensile strength and the 0° tensile elastic modulus of the carbon fiber reinforced composite material in the present invention.

The present invention is described below more concretely by way of Examples.

(Example 1)

A spinning solution containing a polyacrylonitrile copolymer in which itaconic acid was copolymerized was produced by solution polymerization using dimethyl sulfoxide as a solvent. The obtained spinning solution was subjected to dry-wet spinning, wherein the solution was once discharged into the air from a spinneret and then introduced into a coagulation bath composed of an aqueous solution of dimethyl sulfoxide, to obtain coagulated filaments. The coagulated filaments were washed with water by a conventional method and then drawn at a ratio of 3.5 in two warm water baths. Subsequently, an amino-modified silicone-based silicone oil agent was applied to the fiber tow after the water-bath drawing, and dry densification treatment was performed using a heated roller at 160°C, to obtain a fiber tow having a number of single fibers of 6000. Two yarns of the obtained fiber tow were combined to form a fiber tow having a number of single fibers of 12,000, and the resulting fiber tow was drawn at a ratio of 3.7 in pressurized steam, to achieve a total draw ratio of 13 during spinning. Thereafter, entanglement treatment was performed to obtain a polyacrylonitrile-based precursor fiber tow having a degree of crystal orientation of 93%, a single-fiber fineness of 0.75 dtex, and a number of single fibers of 12,000. Subsequently, using the conditions of the oxidation temperature and the oxidation time in Reference Example 1 shown in Table 1, the polyacrylonitrile-based precursor fiber tow was subjected to oxidation treatment while being drawn at a draw ratio of 1 in an air atmosphere in an oven, to obtain the oxidized fiber tow shown in Table 1.

[Table 1]

| | Oxidation temperature | | Oxidation time | | After first-furnace oxidation | Oxidized fiber tow | |
|---|---|---|---|---|---|---|---|
| | First furnace | Second furnace | First furnace | Second furnace | IR peak intensity ratio 1453 $cm^{-1}$/1370 $cm^{-1}$ | IR peak intensity ratio 1453 $cm^{-1}$/1370 $cm^{-1}$ | IR peak intensity ratio 1254 $cm^{-1}$/1370 $cm^{-1}$ |
| | °C | °C | Minutes | Minutes | - | - | - |
| Reference Example 1 | 250 | 280 | 11 | 6 | 1.03 | 0.71 | 0.61 |
| Reference Example 2 | 250 | 284 | 12 | 6 | 1.01 | 0.73 | 0.63 |
| Reference Example 3 | 250 | 290 | 13 | 12 | 1.01 | 0.58 | 0.58 |

Here, in Table 1, the process of oxidation in the "first furnace" corresponds to the first oxidation process, and the process of oxidation in the "second furnace" corresponds to the second oxidation process.

The obtained oxidized fiber tow was placed in a nitrogen atmosphere at a temperature of 300 to 800°C, and the draw ratio and the total heat treatment amount at not less than 600°C were controlled to obtain a pre-carbonized fiber tow. The obtained pre-carbonized fiber tow was placed in a nitrogen atmosphere, and the maximum temperature and the tension were controlled to perform carbonization treatment, to obtain an untreated carbon fiber tow. The conditions for the pre-carbonization treatment and the carbonization treatment are summarized in Table 2.

[Table 2]

| | Oxidation conditions | Pre-carbonization step | | Carbonization step | | Post-treatment process | |
|---|---|---|---|---|---|---|---|
| | | Draw ratio | Total heat treatment amount at not less than 600°C | Maximum temperature | Tension | Hot roller surface temperature | Hot roller contact time |
| | - | - | °C·min | °C | mN/dtex | °C | Seconds |
| Example 1 | Reference Example 1 | 1.18 | 350 | 1800 | 3.5 | 120 | 35 |
| Example 2 | Reference Example 1 | 1.18 | 350 | 1800 | 5.5 | 120 | 35 |
| Example 3 | Reference Example 1 | 1.18 | 350 | 1800 | 7.5 | 120 | 35 |
| Example 4 | Reference Example 1 | 1.18 | 380 | 1800 | 5.5 | 120 | 35 |
| Example 5 | Reference Example 1 | 1.18 | 320 | 1800 | 5.5 | 120 | 35 |
| Example 6 | Reference Example 1 | 1.18 | 580 | 1800 | 5.5 | 120 | 35 |
| Example 7 | Reference Example 1 | 1.18 | 350 | 1800 | 5.5 | 120 | 45 |
| Example 8 | Reference Example 2 | 1.18 | 350 | 1800 | 3.5 | 120 | 35 |
| Comparative Example 1 | Reference Example 1 | 1.18 | 350 | 1800 | 2.0 | 120 | 35 |
| Comparative Example 2 | Reference Example 1 | 1.18 | 350 | 1800 | 9.0 | 120 | 35 |
| Comparative Example 3 | Reference Example 1 | 1.10 | 720 | 1800 | 4.0 | 120 | 35 |
| Comparative Example 4 | Reference Example 1 | 1.18 | 250 | 1800 | 5.5 | 120 | 35 |
| Comparative Example 5 | Reference Example 1 | 1.18 | 0 | 1800 | 5.5 | 120 | 35 |
| Comparative Example 6 | Reference Example 1 | 1.09 | 1400 | 1800 | 4.0 | 120 | 35 |
| Comparative Example 7 | Reference Example 1 | 1.18 | 350 | 1800 | 5.5 | 120 | 35 |
| Comparative Example 8 | Reference Example 1 | 1.18 | 590 | 1800 | 5.5 | 120 | 35 |
| Comparative Example 9 | Reference Example 3 | 1.18 | 350 | 1800 | 3.5 | 120 | 35 |
| Comparative Example 10 | Reference Example 1 | 1.05 | 350 | 1800 | 3.5 | 120 | 35 |
| Comparative Example 11 | Reference Example 1 | 1.18 | 350 | 2250 | 3.5 | 120 | 35 |
| Comparative Example 12 | Reference Example 1 | 1.18 | 350 | 1500 | 3.5 | 120 | 35 |

(continued)

| | Oxidation conditions | Pre-carbonization step | | Carbonization step | | Post-treatment process | |
|---|---|---|---|---|---|---|---|
| | | Draw ratio | Total heat treatment amount at not less than 600°C | Maximum temperature | Tension | Hot roller surface temperature | Hot roller contact time |
| | - | - | °C·min | °C | mN/dtex | °C | Seconds |
| Comparative Example 13 | Reference Example 1 | 1.18 | 350 | 1800 | 3.5 | 200 | 35 |
| Comparative Example 14 | Reference Example 1 | 1.18 | 350 | 1800 | 3.5 | 85 | 35 |
| Comparative Example 15 | Reference Example 1 | 1.18 | 350 | 1800 | 3.5 | 120 | 20 |
| Comparative Example 16 | Reference Example 1 | 1.18 | 350 | 1800 | 3.5 | 120 | 70 |

The obtained untreated carbon fiber tow was subjected to electrolytic surface treatment using an aqueous ammonium hydrogen carbonate solution as an electrolytic solution. The carbon fiber after the electrolytic surface treatment was washed with water, and dried in heated air at a temperature of 150°C. Subsequently, the dried carbon fiber tow was continuously immersed in a sizing bath containing an epoxy-based sizing agent, thereby impregnating the carbon fiber with the epoxy-based sizing agent to obtain a substantially untwisted carbon fiber tow. The adhesion amount of the sizing was adjusted to 1.2% by mass. The thus obtained carbon fiber tow had a single-fiber diameter of 5.3 μm, a density of 1.77 $g/cm^3$, and a crystallite size of 2.5 nm, and had a strand tensile strength of 7.2 GPa, a strand tensile elastic modulus of 342 GPa, and a single-fiber compressive strength of 4.9 GPa, indicating that the carbon fiber tow has high mechanical properties. Further, the carbon fiber tow had a thickness of 0.085 mm and a coefficient of variation of thickness of 2.8%, and the thickness of the carbon fiber tow after spreading was 0.053 mm. Thus, the carbon fiber tow had both a small thickness and a small variation in thickness. Further, the unwinding fuzz count was 1 per 100 m, indicating that the carbon fiber tow has a favorable quality grade. The above results are summarized in Table 3.

[Table 3]

| | Carbon fiber tow | | | | | | | | | | | |
|---|---|---|---|---|---|---|---|---|---|---|---|---|
| | Single-fiber diameter | Density | Strand tensile strength | Strand tensile elastic modulus | Initial tensile elastic modulus | Crystallite size | Single-fiber compressive strength | Twist Presence or absence of residual twist | Unwinding fuzz count | Thickness of carbon fiber tow | Coefficient of variation of thickness of carbon fiber tow | Thickness of carbon fiber tow after spreading |
| | μm | g/cm$^3$ | GPa | GPa | GPa | nm | GPa | - | per 100 m | mm | % | mm |
| Example 1 | 5.3 | 1.77 | 7.2 | 342 | 319 | 2.5 | 4.9 | Untwisted | 1 | 0.085 | 2.8 | 0.053 |
| Example 2 | 5.3 | 1.77 | 7.2 | 353 | 328 | 2.5 | 4.9 | Untwisted | 4 | 0.088 | 3.4 | 0.049 |
| Example 3 | 5.2 | 1.77 | 7.3 | 368 | 340 | 2.5 | 4.9 | Untwisted | 16 | 0.086 | 4.7 | 0.050 |
| Example 4 | 5.3 | 1.77 | 7.4 | 351 | 327 | 2.5 | 4.9 | Untwisted | 3 | 0.083 | 3.5 | 0.048 |
| Example 5 | 5.3 | 1.77 | 7.1 | 354 | 329 | 2.5 | 4.9 | Untwisted | 6 | 0.090 | 3.8 | 0.054 |
| Example 6 | 5.3 | 1.77 | 7.2 | 352 | 327 | 2.5 | 4.9 | Untwisted | 9 | 0.092 | 4.3 | 0.060 |
| Example 7 | 5.3 | 1.77 | 7.2 | 353 | 328 | 2.5 | 4.9 | Untwisted | 3 | 0.080 | 2.6 | 0.045 |
| Example 8 | 5.4 | 1.77 | 7.0 | 341 | 319 | 2.5 | 4.9 | Untwisted | 2 | 0.087 | 3.9 | 0.053 |
| Comparative Example 1 | 5.3 | 1.77 | 6.9 | 332 | 311 | 2.5 | 4.9 | Untwisted | 1 | 0.090 | 2.6 | 0.051 |
| Comparative Example 2 | 5.3 | 1.77 | 6.7 | 378 | 348 | 2.5 | 4.9 | Untwisted | 25 | 0.089 | 5.8 | 0.062 |
| Comparative Example 3 | 5.4 | 1.76 | 6.6 | 335 | 314 | 2.5 | 4.9 | Untwisted | 28 | 0.088 | 5.3 | 0.053 |
| Comparative Example 4 | 5.3 | 1.77 | 6.8 | 353 | 328 | 2.5 | 4.9 | Untwisted | 35 | 0.095 | 8.1 | 0.091 |
| Comparative Example 5 | 5.3 | 1.77 | 6.5 | 353 | 328 | 2.5 | 4.9 | Untwisted | 30 | 0.092 | 9.0 | 0.112 |
| Comparative Example 6 | 5.3 | 1.77 | 6.5 | 332 | 322 | 2.5 | 4.9 | Untwisted | 42 | 0.098 | 5.6 | 0.110 |
| Comparative Example 7 | 4.4 | 1.77 | 7.5 | 357 | 330 | 2.5 | 4.9 | Untwisted | 39 | 0.092 | 6.8 | 0.058 |

(continued)

| | Carbon fiber tow | | | | | | | | | | | |
|---|---|---|---|---|---|---|---|---|---|---|---|---|
| | Single-fiber diameter | Density | Strand tensile strength | Strand tensile elastic modulus | Initial tensile elastic modulus | Crystallite size | Single-fiber compressive strength | Twist Presence or absence of residual twist | Unwinding fuzz count | Thickness of carbon fiber tow | Coefficient of variation of thickness of carbon fiber tow | Thickness of carbon fiber tow after spreading |
| | μm | g/cm$^3$ | GPa | GPa | GPa | nm | GPa | - | per 100 m | mm | % | mm |
| Comparative Example 8 | 4.5 | 1.77 | 7.6 | 357 | 330 | 2.5 | 4.9 | Untwisted | 45 | 0.096 | 7.9 | 0.100 |
| Comparative Example 9 | 5.3 | 1.77 | 6.0 | 342 | 319 | 2.5 | 4.9 | Untwisted | 28 | 0.091 | 6.2 | 0.072 |
| Comparative Example 10 | 5.5 | 1.75 | 6.6 | 329 | 309 | 2.5 | 4.9 | Untwisted | 1 | 0.082 | 3.0 | 0.054 |
| Comparative Example 11 | 5.1 | 1.79 | 6.2 | 382 | 350 | 3.4 | 4.0 | Untwisted | 19 | 0.085 | 4.9 | 0.054 |
| Comparative Example 12 | 5.4 | 1.83 | 7.8 | 310 | 294 | 2.0 | 5.5 | Untwisted | 1 | 0.082 | 3.1 | 0.046 |
| Comparative Example 13 | 5.3 | 1.77 | 7.2 | 340 | 318 | 2.5 | 4.9 | Untwisted | 48 | 0.062 | 16.0 | 0.022 |
| Comparative Example 14 | 5.3 | 1.77 | 7.2 | 341 | 319 | 2.5 | 4.9 | Untwisted | 6 | 0.180 | 11.2 | 0.176 |
| Comparative Example 15 | 5.3 | 1.77 | 7.2 | 341 | 319 | 2.5 | 4.9 | Untwisted | 7 | 0.161 | 10.3 | 0.155 |
| Comparative Example 16 | 5.3 | 1.77 | 7.2 | 340 | 318 | 2.5 | 4.9 | Untwisted | 33 | 0.055 | 10.0 | 0.040 |

Further, using this carbon fiber tow, a prepreg and a carbon fiber reinforced composite material were prepared with the resin composition shown below. The prepreg had a fiber areal weight of 70 g/$m^2$ and a fiber volume fraction of 63%. Based on measurement of the elastic modulus of a cured resin product composed of the same resin composition in accordance with JIS-K7171 (1994), the elastic modulus was 4.4 GPa. The quality grade and the fuzz defect count of the thus obtained prepreg were favorable, and the 0° compressive strength, the 0° tensile strength, and the 0° tensile elastic modulus of the carbon fiber reinforced composite material were all at high levels. The mechanical properties of the prepreg and the carbon fiber reinforced composite material are shown in Table 4 and Table 5.

Resin Composition:

· Liquid bisphenol A-type epoxy resin ("jER (registered trademark)" 828: manufactured by Mitsubishi Chemical Corporation): 20 parts by mass
· Triglycidyl-m-aminophenol ("Araldite (registered trademark)" MY0600: manufactured by Huntsman Advanced Materials): 50 parts by mass
· Phenol novolac-type epoxy ("jER (registered trademark)" 154: manufactured by Mitsubishi Chemical Corporation): 30 parts by mass

Curing Agent:

· Dicyandiamide (manufactured by Mitsubishi Chemical Corporation): 6 parts by mass Curing Accelerator:
· 3-(3,4-Dichlorophenyl)-1,1-dimethylurea (manufactured by Hodogaya Chemical Co., Ltd.)): 3 parts by mass.

[Table 4]

| | Prepreg | |
|---|---|---|
| | Quality grade | Fuzz defect count |
| | - | - |
| Example 1 | S | S |
| Example 2 | S | A |
| Example 3 | A | B |
| Example 4 | S | S |
| Example 5 | S | A |
| Example 6 | S | A |
| Example 7 | S | S |
| Example 8 | S | S |
| Comparative Example 1 | S | S |
| Comparative Example 2 | B | C |
| Comparative Example 3 | B | C |
| Comparative Example 4 | C | C |
| Comparative Example 5 | C | C |
| Comparative Example 6 | B | C |
| Comparative Example 7 | B | C |
| Comparative Example 8 | C | C |
| Comparative Example 9 | A | C |
| Comparative Example 10 | S | S |
| Comparative Example 11 | A | B |
| Comparative Example 12 | S | S |

(continued)

| | Prepreg | |
|---|---|---|
| | Quality grade | Fuzz defect count |
| | - | - |
| Comparative Example 13 | C | C |
| Comparative Example 14 | C | A |
| Comparative Example 15 | C | A |
| Comparative Example 16 | B | C |

[Table 5]

| Carbon fiber reinforced composite material | | | |
|---|---|---|---|
| Carbon fiber tow | 0° tensile strength | 0° tensile elastic modulus | 0° compressive strength |
| - | GPa | GPa | GPa |
| Example 1 | 3.7 | 203 | 1.7 |
| Example 2 | 3.7 | 212 | 1.7 |
| Example 3 | 3.8 | 220 | 1.7 |
| Comparative Example 1 | 3.5 | 193 | 1.7 |
| Comparative Example 4 | 3.4 | 210 | 1.6 |
| Comparative Example 9 | 3.0 | 203 | 1.7 |
| Comparative Example 11 | 3.3 | 227 | 1.5 |
| Comparative Example 12 | 3.9 | 182 | 1.9 |

(Example 2)

A carbon fiber tow was obtained in the same manner as in Example 1 except that the tension in the carbonization step was 5.5 mN/dtex. The obtained carbon fiber tow was subjected to various evaluations. The results are summarized in Tables 3 to 5. A carbon fiber tow having high mechanical properties, a favorable quality grade, a small thickness, and a small variation in thickness was obtained. Further, a prepreg and a carbon fiber reinforced composite material were prepared in the same manner as in Example 1. The prepreg had a fiber areal weight of 69 g/m$^2$ and a fiber volume fraction of 61%. The quality grade and the fuzz defect count of the resulting prepreg were also favorable. Further, the 0° compressive strength, the 0° tensile strength, and the 0° tensile elastic modulus of the carbon fiber reinforced composite material were all at high levels.

(Example 3)

A carbon fiber tow was obtained in the same manner as in Example 1 except that the tension in the carbonization step was 7.5 mN/dtex. The obtained carbon fiber tow was subjected to various evaluations. The results are summarized in Tables 3 to 5. A carbon fiber tow having high mechanical properties, a favorable quality grade, a small thickness, and a small variation in thickness was obtained. Further, a prepreg and a carbon fiber reinforced composite material were prepared in the same manner as in Example 1. The prepreg had a fiber areal weight of 70 g/m$^2$ and a fiber volume fraction of 62%. The quality grade and the fuzz defect count of the resulting prepreg were also favorable. Further, the 0° compressive strength, the 0° tensile strength, and the 0° tensile elastic modulus of the carbon fiber reinforced composite material were all at high levels.

(Example 4)

A carbon fiber tow was obtained in the same manner as in Example 2 except that the total heat treatment amount at not less than 600°C in the pre-carbonization step was 380°C·min. The obtained carbon fiber tow was subjected to various evaluations. The results are summarized in Tables 3 and 4. A carbon fiber tow having high mechanical properties, a

favorable quality grade, a small thickness, and a small variation in thickness was obtained. Further, a prepreg was prepared in the same manner as in Example 1. The prepreg had a fiber areal weight of 71 g/m$^2$ and a fiber volume fraction of 64%. The quality grade and the fuzz defect count of the resulting prepreg were also favorable.

(Example 5)

A carbon fiber tow was obtained in the same manner as in Example 2 except that the total heat treatment amount at not less than 600°C in the pre-carbonization step was 320°C·min. The obtained carbon fiber tow was subjected to various evaluations. The results are summarized in Tables 3 and 4. A carbon fiber tow having high mechanical properties, a favorable quality grade, a small thickness, and a small variation in thickness was obtained. Further, a prepreg was prepared in the same manner as in Example 1. The prepreg had a fiber areal weight of 69 g/m$^2$ and a fiber volume fraction of 61%. The quality grade and the fuzz defect count of the resulting prepreg were also favorable.

(Example 6)

A carbon fiber tow was obtained in the same manner as in Example 2 except that the total heat treatment amount at not less than 600°C in the pre-carbonization step was 580°C·min. The obtained carbon fiber tow was subjected to various evaluations. The results are summarized in Tables 3 and 4. A carbon fiber tow having high mechanical properties, a favorable quality grade, a small thickness, and a small variation in thickness was obtained. Further, a prepreg was prepared in the same manner as in Example 1. The prepreg had a fiber areal weight of 71 g/m$^2$ and a fiber volume fraction of 63%. The quality grade and the fuzz defect count of the resulting prepreg were also favorable.

(Example 7)

A carbon fiber tow was obtained in the same manner as in Example 2 except that the contact time with the hot roller in the post-treatment process was 45 seconds. The obtained carbon fiber tow was subjected to various evaluations. The results are summarized in Tables 3 and 4. A carbon fiber tow having high mechanical properties, a favorable quality grade, a small thickness, and a small variation in thickness was obtained. Further, a prepreg was prepared in the same manner as in Example 1. The prepreg had a fiber areal weight of 70 g/m$^2$ and a fiber volume fraction of 63%. The quality grade and the fuzz defect count of the resulting prepreg were also favorable.

(Example 8)

A carbon fiber tow was obtained in the same manner as in Example 1 except that the oxidation treatment was carried out using the conditions of the oxidation temperature and the oxidation time in Reference Example 2 shown in Table 1. The obtained carbon fiber tow was subjected to various evaluations. The results are summarized in Tables 3 and 4. A carbon fiber tow having high mechanical properties, a favorable quality grade, a small thickness, and a small variation in thickness was obtained. Further, a prepreg was prepared in the same manner as in Example 1. The prepreg had a fiber areal weight of 69 g/m$^2$ and a fiber volume fraction of 62%. The quality grade and the fuzz defect count of the resulting prepreg were also favorable.

(Comparative Example 1)

A carbon fiber tow was obtained in the same manner as in Example 1 except that the tension in the carbonization step was 2.0 mN/dtex. The obtained carbon fiber tow was subjected to various evaluations. The results are summarized in Tables 3 to 5. Although a carbon fiber tow having a favorable quality grade, a small thickness, and a small variation in thickness was obtained, the strand tensile elastic modulus was insufficient. Further, a prepreg and a carbon fiber reinforced composite material were prepared in the same manner as in Example 1. The prepreg had a fiber areal weight of 70 g/m$^2$ and a fiber volume fraction of 62%. The quality grade and the fuzz defect count of the resulting prepreg were favorable. Further, the tensile elastic modulus of the carbon fiber reinforced composite material was at a low level.

(Comparative Example 2)

A carbon fiber tow was obtained in the same manner as in Example 1 except that the tension in the carbonization step was 9.0 mN/dtex. The obtained carbon fiber tow was subjected to various evaluations. The results are summarized in Tables 3 and 4. The obtained carbon fiber tow had high mechanical properties, but had a high unwinding fuzz count. Although the carbon fiber tow had a small thickness, the coefficient of variation of thickness was large. Therefore, the quality grade and the fuzz defect count of the resulting prepreg were poor.

(Comparative Example 3)

A carbon fiber tow was obtained in the same manner as in Example 1 except that the total heat treatment amount at not less than 600°C in the pre-carbonization step was 720°C·min, that the draw ratio in the pre-carbonization step was 1.10, and that the tension in the carbonization step was 4.0 mN/dtex. The obtained carbon fiber tow was subjected to various evaluations. The results are summarized in Tables 3 and 4. The obtained carbon fiber tow had a low strand tensile elastic modulus and a high unwinding fuzz count. Although the carbon fiber tow had a small thickness, the coefficient of variation of thickness was large. Further, the quality grade and the fuzz defect count of the resulting prepreg were poor.

(Comparative Example 4)

A carbon fiber tow was obtained in the same manner as in Example 2 except that the total heat treatment amount at not less than 600°C in the pre-carbonization step was 250°C·min. The obtained carbon fiber tow was subjected to various evaluations. The results are summarized in Tables 3 and 4. The obtained carbon fiber tow had high mechanical properties, but had a high unwinding fuzz count. Although the carbon fiber tow had a small thickness, the coefficient of variation of thickness was large. Further, a prepreg and a carbon fiber reinforced composite material were prepared in the same manner as in Example 1. The prepreg had a fiber areal weight of 69 g/$m^2$ and a fiber volume fraction of 60%. The quality grade and the fuzz defect count of the resulting prepreg were poor. Further, the 0° compressive strength and the 0° tensile strength of the carbon fiber reinforced composite material were at levels inferior to those in Example 2.

(Comparative Example 5)

A carbon fiber tow was obtained in the same manner as in Example 2 except that the total heat treatment amount at not less than 600°C in the pre-carbonization step was 0°C·min. The obtained carbon fiber tow was subjected to various evaluations. The results are summarized in Tables 3 and 4. The obtained carbon fiber tow had high mechanical properties, but had a high unwinding fuzz count. Although the carbon fiber tow had a small thickness, the coefficient of variation of thickness was large. Further, the quality grade and the fuzz defect count of the resulting prepreg were poor.

(Comparative Example 6)

A carbon fiber tow was obtained in the same manner as in Example 1 except that the total heat treatment amount at not less than 600°C in the pre-carbonization step was 1400°C·min (this caused deterioration of the quality grade), that the draw ratio in the pre-carbonization step was 1.09, and that the tension in the carbonization step was 4.0 mN/dtex. The obtained carbon fiber tow was subjected to various evaluations. The results are summarized in Tables 3 and 4. The obtained carbon fiber tow had a low strand tensile strength and a low strand tensile elastic modulus, and had a high unwinding fuzz count. Although the carbon fiber tow had a small thickness, the coefficient of variation of thickness was large. Further, the quality grade and the fuzz defect count of the resulting prepreg were poor.

(Comparative Example 7)

A carbon fiber tow was obtained in the same manner as in Example 2 except that the single-fiber fineness of the polyacrylonitrile-based precursor fiber tow was 0.61 dtex. The obtained carbon fiber tow was subjected to various evaluations. The results are summarized in Tables 3 and 4. The obtained carbon fiber tow had high mechanical properties. However, because the single-fiber fineness was small, the quality grade during carbon fiber production was poor, and the unwinding fuzz count was high. Although the carbon fiber tow had a small thickness, the coefficient of variation of thickness was large. Further, the quality grade and the fuzz defect count of the resulting prepreg were poor.

(Comparative Example 8)

A carbon fiber tow was obtained in the same manner as in Comparative Example 7 except that the total heat treatment amount at not less than 600°C in the pre-carbonization step was 590°C·min. The obtained carbon fiber tow was subjected to various evaluations. The results are summarized in Tables 3 and 4. The obtained carbon fiber tow had high mechanical properties. However, because the single-fiber fineness was small, the quality grade during carbon fiber production was poor, and the unwinding fuzz count was high. Although the carbon fiber tow had a small thickness, the coefficient of variation of thickness was large. Further, the quality grade and the fuzz defect count of the resulting prepreg were poor.

(Comparative Example 9)

A carbon fiber tow was obtained in the same manner as in Example 1 except that the oxidation treatment was carried out using the conditions of the oxidation temperature and the oxidation time in Reference Example 3 shown in Table 1. The obtained carbon fiber tow was subjected to various evaluations. The results are summarized in Tables 3 to 5. The carbon fiber tow had a low strand tensile strength and a high unwinding fuzz count. Although the carbon fiber tow had a small thickness, the coefficient of variation of thickness was large. Further, a prepreg and a carbon fiber reinforced composite material were prepared in the same manner as in Example 1. The prepreg had a fiber areal weight of 70 g/m$^2$ and a fiber volume fraction of 63%. The quality grade and the fuzz defect count of the resulting prepreg were also poor. Further, the 0° tensile strength of the carbon fiber reinforced composite material was at a low level.

(Comparative Example 10)

A carbon fiber tow was obtained in the same manner as in Example 1 except that the draw ratio in the pre-carbonization step was 1.05. The obtained carbon fiber tow was subjected to various evaluations. The results are summarized in Tables 3 and 4. The strand tensile strength and the strand tensile elastic modulus of the obtained carbon fiber tow were low and insufficient. The obtained carbon fiber tow had a favorable quality grade, a small thickness, and a small variation in thickness. Further, the quality grade and the fuzz defect count of the resulting prepreg were also favorable.

(Comparative Example 11)

A carbon fiber tow was obtained in the same manner as in Example 1 except that the maximum temperature in the carbonization step was 2250°C. The obtained carbon fiber tow was subjected to various evaluations. The results are summarized in Tables 3 to 5. The obtained carbon fiber tow had a high strand tensile elastic modulus, but its strand tensile strength and single-fiber compressive strength were low and insufficient. A carbon fiber tow having a favorable quality grade, a small thickness, and a small variation in thickness was obtained. Further, a prepreg and a carbon fiber reinforced composite material were prepared in the same manner as in Example 1. The prepreg had a fiber areal weight of 72 g/m$^2$ and a fiber volume fraction of 61%. The quality grade and the fuzz defect count of the resulting prepreg were also favorable. Further, the 0° compressive strength of the carbon fiber reinforced composite material was at a low level.

(Comparative Example 12)

A carbon fiber tow was obtained in the same manner as in Example 1 except that the maximum temperature in the carbonization step was 1500°C. The obtained carbon fiber tow was subjected to various evaluations. The results are summarized in Tables 3 to 5. The obtained carbon fiber tow had a high strand tensile strength and a high single-fiber compressive strength, but had a low and insufficient strand tensile elastic modulus. A carbon fiber tow having a favorable quality grade, a small thickness, and a small variation in thickness was obtained. Further, a prepreg and a carbon fiber reinforced composite material were prepared in the same manner as in Example 1. The prepreg had a fiber areal weight of 72 g/m$^2$ and a fiber volume fraction of 62%. The quality grade and the fuzz defect count of the resulting prepreg were also favorable. Further, the 0° tensile elastic modulus of the carbon fiber reinforced composite material was at a low level.

(Comparative Example 13)

A carbon fiber tow was obtained in the same manner as in Example 1 except that the surface temperature of the hot roller in the post-treatment process was 200°C. The obtained carbon fiber tow was subjected to various evaluations. The results are summarized in Tables 3 and 4. Although a carbon fiber tow having high mechanical properties and a small thickness was obtained, the sizing agent was altered due to the high surface temperature of the hot roller, and winding of the carbon fiber tow around the roller occurred. Therefore, a carbon fiber tow having a high unwinding fuzz count and a large variation in thickness was obtained. Further, the quality grade and the fuzz defect count of the resulting prepreg were poor.

(Comparative Example 14)

A carbon fiber tow was obtained in the same manner as in Example 1 except that the surface temperature of the hot roller in the post-treatment process was 85°C. The obtained carbon fiber tow was subjected to various evaluations. The results are summarized in Tables 3 and 4. Although a carbon fiber tow having high mechanical properties was obtained, a carbon fiber tow having a large thickness and a large variation in thickness was obtained due to the low surface

temperature of the hot roller and insufficient drying. Further, the quality grade of the resulting prepreg was also poor.

(Comparative Example 15)

A carbon fiber tow was obtained in the same manner as in Example 1 except that the contact time with the hot roller in the post-treatment process was 20 seconds. The obtained carbon fiber tow was subjected to various evaluations. The results are summarized in Tables 3 and 4. Although a carbon fiber tow having high mechanical properties was obtained, a carbon fiber tow having a large thickness and a large variation in thickness was obtained due to the short contact time with the hot roller and insufficient drying. Further, the quality grade of the resulting prepreg was also poor.

(Comparative Example 16)

A carbon fiber tow was obtained in the same manner as in Example 1 except that the contact time with the hot roller in the post-treatment process was 70 seconds. The obtained carbon fiber tow was subjected to various evaluations. The results are summarized in Tables 3 and 4. Although a carbon fiber tow having high mechanical properties and a small thickness was obtained, the long contact time with the hot roller caused alteration of the sizing agent and winding around the roller. Therefore, a carbon fiber tow having an insufficient unwinding fuzz count and a large variation in thickness was obtained. Further, the quality grade and the fuzz defect count of the resulting prepreg were poor.

**Claims**

1. A prepreg comprising a carbon fiber tow impregnated with a thermosetting resin, wherein the carbon fiber tow has a strand tensile strength of 6.7 to 8.0 GPa and a strand tensile elastic modulus of 340 to 380 GPa; the carbon fiber tow has a thickness of 0.05 to 0.10 mm; the carbon fiber tow has a coefficient of variation of thickness of not more than 5.0%; the carbon fiber tow is substantially untwisted; and the prepreg has a fiber areal weight of 30 to 100 g/m$^2$ and a fiber volume fraction of 50 to 80%.

2. A carbon fiber tow having a strand tensile strength of 6.7 to 8.0 GPa and a strand tensile elastic modulus of 340 to 380 GPa, wherein the carbon fiber tow has a thickness of 0.05 to 0.10 mm; the carbon fiber tow has a coefficient of variation of thickness of not more than 5.0%; and the carbon fiber tow is substantially untwisted.

3. The carbon fiber tow according to claim 2, having a number of filaments of 6000 to 18,000.

4. The carbon fiber tow according to claim 2 or 3, having a single-fiber diameter of 5.0 to 6.0 μm.

5. The carbon fiber tow according to claim 2 or 3, having a density of not more than 1.82 g/cm$^3$.

6. The carbon fiber tow according to claim 2 or 3, having a crystallite size of 2.5 to 3.3 nm.

7. The carbon fiber tow according to claim 2 or 3, having an unwinding fuzz count of not more than 20 per 100 m.

8. The carbon fiber tow according to claim 2 or 3, whose single-fiber composite has a single-fiber compressive strength of not less than 4.8 GPa according to a compression fragmentation method.

9. A method of producing a carbon fiber tow, the method comprising:

   a first oxidation process of subjecting a polyacrylonitrile-based precursor fiber tow to heat treatment for 8 to 25 minutes until a ratio of a peak intensity at 1453 cm$^{-1}$ to a peak intensity at 1370 cm$^{-1}$ in an infrared spectrum is within a range of 0.98 to 1.10;
   a second oxidation process of subjecting a fiber tow obtained in the first oxidation process to heat treatment for 5 to 14 minutes until a ratio of a peak intensity at 1453 cm$^{-1}$ to a peak intensity at 1370 cm$^{-1}$ in an infrared spectrum is within a range of 0.70 to 0.75 and a ratio of a peak intensity at 1254 cm$^{-1}$ to a peak intensity at 1370 cm$^{-1}$ in an infrared spectrum is within a range of 0.50 to 0.65;
   a pre-carbonization step of subjecting a fiber tow obtained in the second oxidation process to heat treatment in an inert atmosphere at a maximum temperature of 600 to 800°C under conditions with a draw ratio of 1.10 to 1.25 and a total heat treatment amount at not less than 600°C of 300 to 600°C·min;
   a carbonization step of subjecting a fiber tow obtained in the pre-carbonization step to heat treatment in an inert

atmosphere at a maximum temperature of 1670 to 2000°C under conditions with a tension of the fiber tow of 3.0 to 8.0 mN/dtex;

a step of subjecting a fiber tow obtained in the carbonization step to electrolytic surface treatment to obtain a carbon fiber tow; and

a step of continuously immersing the obtained carbon fiber tow in a sizing bath to impregnate the carbon fiber tow with a sizing agent, and then bringing the carbon fiber tow impregnated with the sizing agent into contact with a hot roller at a surface temperature of 100 to 180°C for 30 to 50 seconds to obtain a substantially untwisted carbon fiber tow.

**INTERNATIONAL SEARCH REPORT**

International application No. **PCT/JP2025/011700**

**A. CLASSIFICATION OF SUBJECT MATTER**

***B29B 11/16***(2006.01)i; ***D01F 6/18***(2006.01)i; ***D01F 9/22***(2006.01)i
FI: B29B11/16; D01F9/22; D01F6/18 E

According to International Patent Classification (IPC) or to both national classification and IPC

**B. FIELDS SEARCHED**

Minimum documentation searched (classification system followed by classification symbols)

B29B11/16; D01F6/18; D01F9/22

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2023-140384 A (MITSUBISHI CHEMICAL CORPORATION) 05 October 2023 (2023-10-05) claims, paragraphs [0014]-[0020], examples | 1-3 |
| Y | | 1-8 |
| A | | 9 |
| Y | WO 2022/009796 A1 (TEIJIN LIMITED) 13 January 2022 (2022-01-13) claims, paragraphs [0010]-[0015], examples | 1-8 |
| A | | 9 |
| Y | WO 2019/203088 A1 (TORAY INDUSTRIES, INC.) 24 October 2019 (2019-10-24) claims, paragraphs [0019]-[0035], examples | 1-8 |
| A | | 9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 June 2025** | **24 June 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2025/011700**

**C. DOCUMENTS CONSIDERED TO BE RELEVANT**

| Category* | Citation of document, with indication, where appropriate, of the relevant passages | Relevant to claim No. |
|---|---|---|
| Y | JP 2015-10290 A (TORAY INDUSTRIES, INC.) 19 January 2015 (2015-01-19) claims, examples | 8 |
| A | | 9 |

Form PCT/ISA/210 (second sheet) (July 2022)

**INTERNATIONAL SEARCH REPORT**
**Information on patent family members**

International application No.
**PCT/JP2025/011700**

| Patent document cited in search report | Publication date (day/month/year) | Patent family member(s) | Publication date (day/month/year) |
|---|---|---|---|
| JP 2023-140384 A | 05 October 2023 | (Family: none) | |
| WO 2022/009796 A1 | 13 January 2022 | US 2023/0272577 A1 claims, paragraphs [0015]-[0021], examples | |
| WO 2019/203088 A1 | 24 October 2019 | US 2021/0108041 A1 claims, paragraphs [0029]-[0045], examples | |
| JP 2015-10290 A | 19 January 2015 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H3180514 A
- WO 2019244830 A
- WO 2008047745 A
- JP 2008308776 A
- JP 1306619 A
- JP 2009256833 A
- JP 2015010290 A
- JP 2010510406 W
- WO 2016068034 A
- JP 2011252264 A